# EUROPÄISCHE PATENTSCHRIFT

(11) **EP 0 629 521 B1**
(45) Veröffentlichungstag und Bekanntmachung des Hinweises auf die Patenterteilung: **28.01.1998**
(21) Anmeldenummer: 94107906.3
(22) Anmeldetag: 21.05.1994
(51) Int. Cl.: B60J 7/06

(54) **Faltdach für Fahrzeuge**
Foldable roof for vehicle
Toit pliant pour véhicule

(30) Priorität: 15.06.1993 DE 4319718
(43) Veröffentlichungstag der Anmeldung: 21.12.1994
(73) Patentinhaber: WEBASTO KAROSSERIESYSTEME GmbH, D-82131 Stockdorf (DE)
(72) Erfinder: Fürst, Arpad, D-82110 Germering (DE); Pätz, Werner, D-02763 Zittau (DE)
(74) Vertreter: Wiese, Gerhard

(56) Entgegenhaltungen:
- EP-A- 0 376 203
- DE-A- 3 722 434
- DE-C- 4 040 254
- US-A- 1 786 662

## Beschreibung

Die Erfindung bezieht sich auf ein Faltdach für Fahrzeuge mit einem Verdeck, mit einer wechselnden Folge von Faltspriegeln, die mittels Ausstellhebeln zum Öffnen des Verdecks schwenkbar sind, und mit Zwischenspriegeln, welche wenigstens teilweise beidseits mit Längsführungen zum wahlweisen Verschließen oder mindestens teilweisen Freigeben einer in einer festen Dachfläche vorgesehen Dachöffnung zusammenwirken.

Aus DE 40 41 763 C1 ist ein Faltdach für Fahrzeuge der vorstehend genannten Art bekannt. Mit diesem Faltdach soll bezweckt werden, daß man eine möglichst flachbauende Anordnung erhält, bei welcher die Kopffreiheit möglichst wenig beeinträchtigt wird, und bei dem die Faltenbildung in genau vorgegebener, geregelter Weise abläuft. Hierzu ist ein Gelenkbandsystem vorgesehen, welches drucksteife Kettenglieder umfaßt und das beim Öffnen und Schliessen des Verdecks mit Steuerkulissen zusammenwirkt, wobei nur eine einzige Längsführung erforderlich ist. Hierdurch läßt sich die Faltform an die jeweiligen ästhetischen und aerodynamischen Forderungen genau anpassen. Ferner erfordert das Faltdach in lotrechter Richtung nur einen geringen Einbauraum.

Ferner ist aus DE 40 40 254 C1 ein Faltdach für Fahrzeuge mit einem flexiblen, faltbaren Verdeckteil bekannt, welches über eine teilbare Gleitverbindungseinrichtung, wie einen teilbaren Reißverschluß o.dgl., mit einem festen Dachteil verbindbar ist, welches eine Dachöffnung aufweist. Diese gleitbare Verbindungseinrichtung, wie ein Reißverschluß, ist an dem die Dachöffnung begrenzenden Rand umlaufend vorgesehen. Dieses Faltdach läßt sich mit Hilfe von mehreren, feldähnlichen Abschnitten zusammenlegen und gegebenenfalls auch zum Freilegen der gesamten Dachöffnung abnehmen.

Bei Faltdächern ist es insbesondere wesentlich, daß bei geschlossenem Faltdach bzw. geschlossenem Verdeck dieses von der Seite her von der festen Dachfläche nicht oder nur schwer von unbefugten Personen abgehoben werden kann, um sich einen Zugang zum Fahrzeuginnenraum trotz geschlossenem Faltdach zu verschaffen. Ferner sollte vermieden werden, daß sich bei hohen Geschwindigkeiten auf Grund des entstehenden Unterdruckes das Verdeck abhebt, wodurch sich ein unerwünschter Entlüftungseffekt ergeben würde.

Die Erfindung zielt daher darauf ab, ein Faltdach für Fahrzeuge der gattungsgemäßen Art bereitzustellen, welches weitgehend diebstahlsicher ist und bei dem auf zuverlässige Weise ein Abheben des Verdecks bei der Fahrt verhindert wird.

Nach der Erfindung zeichnet sich hierzu ein Faltdach für Fahrzeuge der eingangs genannten Art dadurch aus, daß wenigstens der geschlossene Teil des Verdecks beidseits in einem Abstand von den Längsführungen in Richtung zu den Längsrändern des Verdecks über eine einen zusätzlichen Seitenverschluß bildende lösbare Verbindungseinrichtung dachfest angebunden und niedergehalten ist.

Bei dem erfindungsgemäßen Faltdach ist somit ein zusätzlicher Seitenverschluß entlang den Längsseiten vorgesehen, welcher bei geschlossenem Verdeck oder wenigstens im Bereich des geschlossenen Teils des Verdecks eine seitliche körperliche Verbindung von Verdeck und einem dachfesten Bereich bereitstellt. Hierdurch wird bei geschlossenem Verdeck ein seitliches Abheben und Eingreifen in den Fahrzeuginnenraum weitgehend verhindert und auf jeden Fall erschwert, und man erhält die angestrebte Diebstahlsicherheit bei einem derartigen Fahrzeug mit Faltdach. Auch wird durch diesen zusätzlichen Seitenverschluß nach der Erfindung zugleich erreicht, daß selbst dann, wenn das Fahrzeug mit hoher Geschwindigkeit fährt, das Verdeck zuverlässig gegen die feste Dachfläche niedergehalten wird, um unerwünschte Entlüftungseffekte zu vermeiden.

Vorzugsweise ist das Faltdach nach der Erfindung derart ausgelegt, daß die Verbindungseinrichtung im hinteren Bereich der Längsführungen in Fahrzeuglängsrichtung gesehen, zwangsgesteuert lösbar ist. Hierdurch wird erreicht, daß bei dem Faltdach nach der Erfindung eine gezielte Faltenbildung, ausgehend vom hinteren Bereich des Faltdaches, gegebenenfalls unter Zwangssteuerung bewirkt werden kann.

Gemäß einer ersten bevorzugten Ausführungsform nach der Erfindung wird die lösbare Verbindungseinrichtung bei dem Faltdach für Fahrzeuge von einem in einem Verschlußkabel-Führungskanal verlaufenden Verschlußkabel gebildet, das über ein flexibles Material, welches beispielsweise in Form eines Gewebe- oder Folienbandes aus einem flexiblen Material ausgebildet ist, beidseits an den Längsseiten mit dem Verdeck verbunden ist. Mit Hilfe dieses Verschlußkabels erhält man eine über die gesamte Länge des Faltdachs sich erstreckende flächige Anbindung des Verdecks.

Vorzugsweise wird bei dieser Ausführungsform des Faltdachs zum zwangsgesteuerten Lösen ein Einführungsstück angeordnet, welches den Verschlußkabel-Führungskanal in Richtung des Verdecks freilegt. Somit kann das Verschlußkabel beim Öffnen des Verdecks in der Faltenbildungszone von seiner dachfesten Anbindung gelöst werden, so daß eine frei wählbare Faltenbildung ermöglicht wird.

Zum Erleichtern des Ein- und Auslaufens des Verschlußkabels beim Öffnen und Schließen des Verdecks sind im Öffnungsbereich des Einführungsstücks vorzugsweise Führungen vorgesehen. Mit Hilfe von diesen Führungen wird eine Leichtgängigkeit zum Öffnen und Schließen des Verdecks erreicht.

Zweckmäßigerweise ist jedes Verschlußkabel an den Längsenden mit dem Verdeckfest verbunden. Diese Verbindung kann auf Grund des Federungsvermögens des Verschlußkabels eine gewisse Eigenelastizität haben, um im geschlossenen Zustand des Verdeckseine gewisse Anlagespannung aufzubringen, so daß das Verdeck im wesentlichen faltenfrei im geschlossenen Zustand gespannt ist, um ein ästhetisches Äußeres zu vermitteln.

Vorzugsweise ist bei der Auslegung des Faltdachs mit einem Verschlußkabel als Seitenverschluß die Auslegung so getroffen, daß das Verschlußkabel die Bewegung des Verdecks beim Öffnen und Schließen mitmacht.

Gemäß einer alternativen Ausführungsform nach der Erfindung wird die lösbare Verbindungseinrichtung beim Faltdach für Fahrzeuge von einem Reißverschluß gebildet. Dieser Reißverschluß dient als zusätzlicher Seitenverschluß und erstreckt sich beidseitig in Längsrichtung des Verdecks.

Zum zwangsgesteuerten Lösen des Reißverschlusses wirkt vorzugsweise ein Öffnungs- und Schließteil mit den Reißverschlußgliedern zusammen, welches vorzugsweise im hinteren Bereich des Verdecks angeordnet ist. Nach geöffneten Reißverschlußgliedern kann dann die Faltenbildung in vorbestimmter Weise vorgenommen werden.

Vorzugsweise sind hierbei in der Nähe des Öffnungs- und Schließteils Führungen für die Reißverschlußglieder vorgesehen, so daß das Öffnen und Schließen des Reißverschlusses mit Hilfe dieser Führungen erleichtert und zuverlässig vorgenommen werden kann.

Ferner zeichnet sich das Faltdach für Fahrzeuge nach der Erfindung dadurch aus, daß die Zwischenspriegel in den Längsführungen über Gleitstücke längsbeweglich geführt sind. Hierzu ist vorzugsweise eine Schienenführung vorgesehen, in welcher sich die Gleitstücke der Zwischenspriegel bewegen.

Um bei einer derartigen Auslegung eines Faltdaches in Verbindung mit einem Seitenverschluß in Form eines Verschlußkabels eine Mitnahme des Verschlußkabels zu ermöglichen, ist vorzugsweise eine Brücke vorgesehen, welche mit dem Gleitstück zur Mitnahme des Verschlußkabels verbunden ist. Mit Hilfe dieser Brückenverbindung wird ferner erreicht, daß das Faltdach trotz des vorgesehenen zusätzlichen Seitenverschlusses möglichst flachbauend ausgelegt ist.

Um eine vorbestimmte Faltenbildung des Verdecks beim Öffnen von hinten her vornehmen zu können, sind die Faltspriegel über einen Ausstellhebel gelenkig mit dem jeweiligen Gleitstück verbunden. Über diesen Ausstellhebel wird somit das Verdeckteil, an welchem der Faltspriegel vorgesehen ist, entsprechend der Verschiebebewegung des Gleitstückes hochgestellt, so daß der Faltspriegel bei der Faltenbildung den höchsten Punkt bestimmt. Vorzugsweise wird die Gelenkverbindung von einem Filmscharnier gebildet.

Die Bewegung des Gleitstücks wird gemäß einer bevorzugten Ausführungsform des Faltdachs mittels eines biegesteifen Antriebskabels bewirkt, welches wenigstens ein Gleitstück in den Längsführungen verfährt. Dieses Antriebskabel kann mit einem Handantrieb oder motorischen Antrieb zum Öffnen und Schließen des Faltdaches verbunden sein.

Um bei der Faltenbildung auch den tiefsten Punkt der Faltenbildung örtlich vorzubestimmen, ist das Verdeck an wenigstens einem Zwischenspriegel niedergehalten. Hierzu wird vorzugsweise eine Feder vorgesehen. Da sich die Faltspriegel und die Zwischenspriegel in ihrer Abfolge abwechseln, sind somit bei der Öffnungs- und Schließbewegung des Verdecks die höchsten und tiefsten Punkte der Faltenbildung hinsichtlich ihrer örtlichen Lage vorbestimmt.

Gemäß einer bevorzugten Ausführungsform nach der Erfindung sind der Antriebskabel-Führungskanal und der Verschlußkabel-Führungskanal abgesehen von dem Einführungsstück in einer gemeinsamen Längsführung vorgesehen. Hierzu wird vorzugsweise eine Führungsschiene eingesetzt, welche beidseits in Längsrichtung der Dachöffnungsbegrenzung verläuft.

Die Erfindung wird nachstehend an Hand von bevorzugten Ausführungsformen unter Bezugnahme auf die beigefügte Zeichnung näher erläutert. Darin zeigt:
- Fig. 1: eine perspektivische Draufsicht auf ein Fahrzeugdach mit einem erfindungsgemäßen Faltdach,
- Fig. 2: eine Draufsicht auf eine erste Ausführungsform eines Faltdachs nach der Erfindung mit teilweise abgenommenem Verdeck zur Verdeutlichung der Einzelheiten desselben,
- Fig. 3: eine schematische Seitenansicht des Faltdachs von Fig. 2,
- Fig. 4: eine Schnittansicht längs der Linie IV-IV in Fig. 3,
- Fig. 5: eine Schnittansicht längs der Linie V-V in Fig. 3,
- Fig. 6: mit den Fig. 6a-6c eine Draufsicht auf die erste Ausführungsform des erfindungsgemäßen Faltdaches im hinteren Bereich in Fig. 1 gesehen mit entsprechenden Profildarstellungen im Bereich der Längsführungen,
- Fig. 7: eine schematische Seitenansicht der ersten Ausführungsform des Faltdaches gemäß den Fig. 2 bis 6 bei wenigstens teilweise geöffnetem Verdeck zur Verdeutlichung der gezielten Faltbildung, und
- Fig. 8: eine Fig. 7 ähnliche Ansicht einer zweiten bevorzugten Ausführungsform eines erfindungsgemäßen Faltdachs mit Seitenverschluß.

In den Figuren der Zeichnung sind gleiche oder ähnliche Teile mit denselben Bezugszeichen versehen.

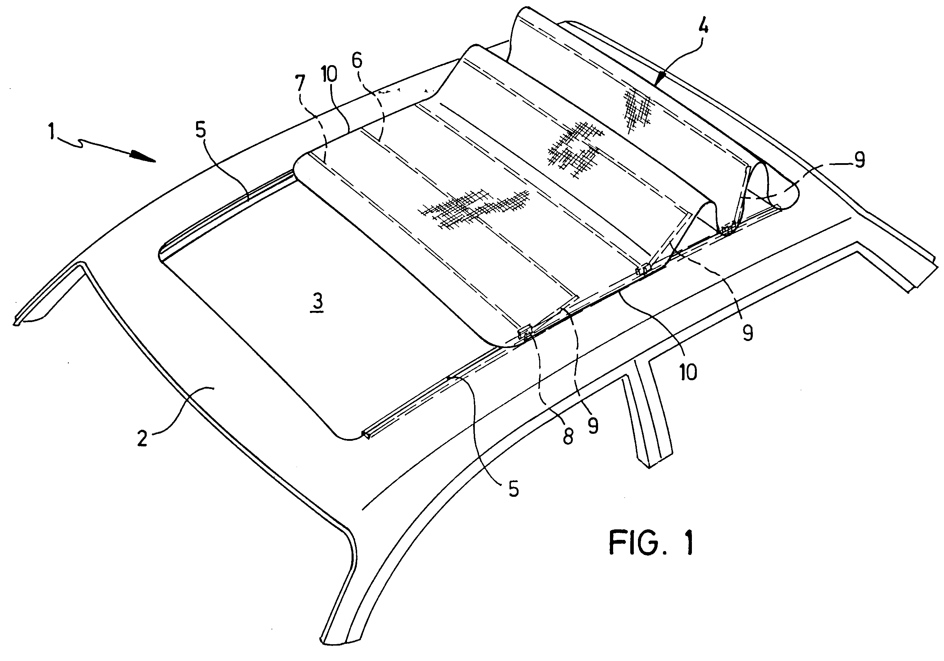

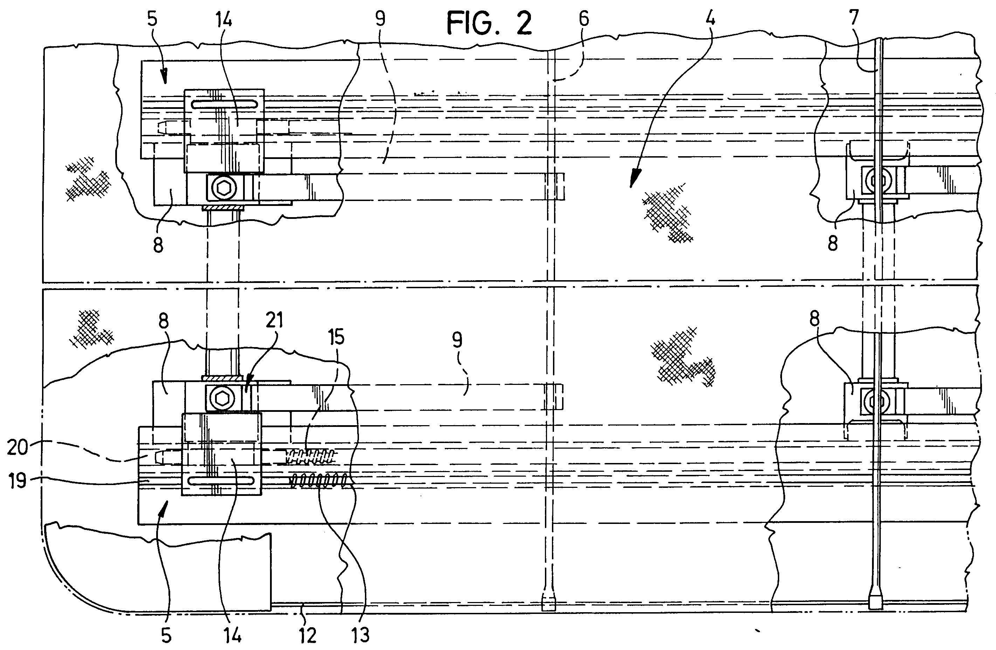

Wie in Fig. 1 der Zeichnung gezeigt ist, ist bei einem Fahrzeug, von dem nur der Dachbereich in Fig. 1 dargestellt ist, ein insgesamt mit 1 bezeichnetes Faltdach vorgesehen. Hierzu ist in einer festen Dachfläche 2 des Fahrzeugs eine Dachöffnung 3 ausgeschnitten. In Längsrichtung der in der festen Dachfläche ausgeschnittenen Dachöffnung 3 sind beidseitig an den Längsrändern der Dachöffnung 3, welche parallel zur Fahrzeuglängsrichtung weisen, Längsführungen 5 angeordnet, deren nähere Einzelheiten nachstehend unter Bezugnahme auf die Fig. 2 bis 6 erläutert werden. Das Verdeck 4 wird von einem flexiblen Material gebildet, welches gemäß der Darstellung in Fig. 1 an der hinten liegenden Querseite dachfest festgelegt ist. Zur Querversteifung und Aussteifung umfaßt das Verdeck 4 mehrere in Längsrichtung im Abstand angeordnete Querspriegel. Diese Querspriegel umfassen Faltspriegel 6 und Zwischenspriegel 7, welche in abwechselnder Anordnung vorgesehen sind, wie dies in Fig. 1 verdeutlicht ist. Die Zwischenspriegel 7 sind hierbei mit Hilfe von Gleitstücken 8 in den zugeordneten Längsführungen 5 längsbeweglich geführt. Die Faltspriedel 6 hingegen sind über Ausstellhebel 9 gelenkig mit den zugeordneten Gleitstücken der jeweiligen Zwischenspriegel 7 verbunden. Die Längsränder des Verdecks 4 sind in Fig. 1 mit 10 bezeichnet.

Wenigstens der geschlossene Teil des Verdecks 4 ist beidseits in einem Abstand von den Längsführungen 5 in Richtung zu den Längsrändern 10 des Verdecks 4 über eine insgesamt mit 11 bezeichnete lösbare Verbindungseinrichtung dachfest angebunden und wird in Richtung zur festen Dachfläche 2 niedergehalten.

Wie sich insbesondere aus den Fig. 2, 3 und 4 ersehen läßt, ist in das flexible Material des Verdecks 4 ein vorzugsweise umlaufendes Spannseil 12 eingebettet, welches dazu dient, das geschlossene Verdeck 4 im gespannten Zustand in Richtung auf die feste Dachfläche 2 niederzuhalten.

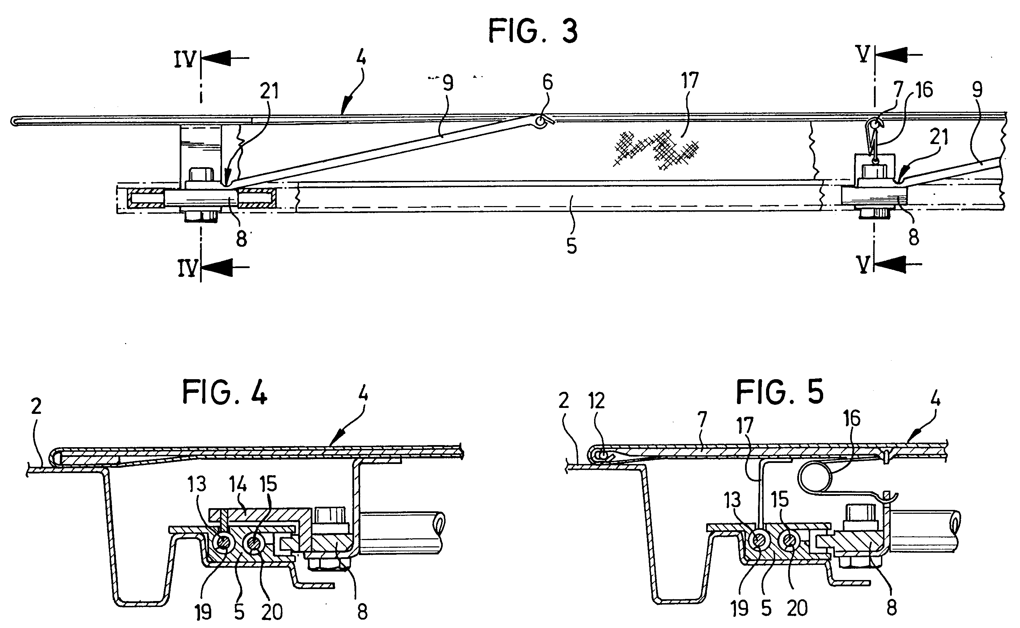

Gemäß der ersten an Hand den Fig. 1 bis 7 dargestellten bevorzugten Ausführungsform des Faltdachs 1 umfaßt die lösbare Verbindungseinrichtung 11 ein Verschlußkabel 13 - welches in Fig. 2 gezeigt - verstellbar festgelegt ist, um die von dem Verschlußkabel 13 aufgebrachte Spannung variieren und an die jeweilige Dachform anpassen zu können. Wie insbesondere aus den Fig. 2 und 4 zu ersehen ist, ist das Verschlußkabel 13 über eine Brücke 14 mit dem Gleitstück 8 bewegungsverbunden und wird somit bei der Längsbewegung des Zwischenspriegels 7 mitgenommen. Ferner ist ein Antriebskabel 15 gezeigt, welches mit Hilfe eines nicht gezeigten Handantriebs oder eines elektrischen Antriebs bewegbar ist und vorzugsweise von einem biegesteifen Kabel an sich üblicher Bauart gebildet wird. Mit Hilfe des Antriebskabels 15 wird der Zwischenspriegel 7 in Längsrichtung bewegt, wobei das zugeordnete Gleitstück 8 in einen entsprechenden Führungskanal der Längsführung 5 eingreift. In dieser Längsführung 5 sind auch die jeweiligen Aufnahmekanäle für das Antriebskabel 15 und das Verschlußkabel 13 ausgebildet.

Abgesehen von dem angetriebenen Zwischenspriegel 7, welcher beispielsweise in Fig. 1 im vorderen Bereich der Dachöffnung 3 liegt, sind die weiteren Zwischenspriegel 7 auch über entsprechende Gleitstücke 8 in den zugeordneten Längsführungen 5 geführt, welche Federn haben, die zwischen dem Verdeck 4 und dem Zwischenspriegel 7 derart wirken, daß sie das Verdeck 4 in Richtung auf den Zwischenspriegel 7 niederhalten und niederdrücken, wie dies insbesondere aus den Fig. 3 und 5 zu ersehen ist.

Ferner ist das Verschlußkabel 13 über seine Längserstreckung hinweg abgesehen von dem Bereich der Verbindung über die Brücke 14 mit dem Verdeck 4 über ein flexibles Gewebe- oder Folienband 17 verbunden. Natürlich kann diese Verbindung auch von einem anderen flexiblen Material gebildet werden, welches eine beidseitige Verbindung des Verschlußkabels 13 mit den Längsseiten des Verdecks 4 in der Nähe der Längsränder 10 desselben gestattet.

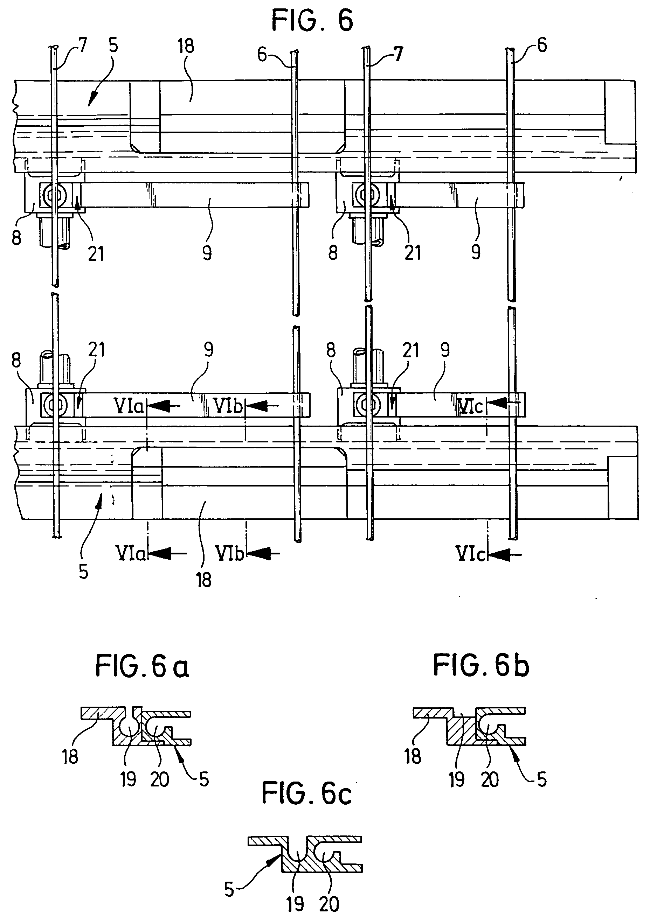

Wie aus den Fig. 6 bis 6c zu ersehen ist, ist vorzugsweise im hinteren Bereich der festen Dachöffnung 3 ein Einführungsstück 18 angeordnet, über welches das Verschlußkabel 13 unter Zwangssteuerung aus dem zugeordneten Kanal der Längsführung 5 austreten kann. An diesem Einführungsstück 18 wird der dem Verschlußkabel 13 zugeordnete Führungskanal 19 in Richtung des Verdecks 4 freigelegt. Somit kann das Verschlußkabel 13 in gesteuerter und geführterWeise beim Öffnen oder Schließen des Verdecks 4 in den zugeordneten Führungskanal 19 eintreten oder aus demselben austreten, um die gewünschte Faltenbildung des Verdecks 4 bei wenigstens teilweise geöffneter Dachöffnung 3 zu ermöglichen.

Die zwischen jeweils zwei Zwischenspriegeln 7 liegenden Faltspriegel 6 sind über den Ausstellhebel 9 gelenkig mit dem jeweiligen Gleitstück 8 des zugeordneten Zwischenspriegels 7 verbunden. Ein Beispiel einer derartigen Verbindung ist insbesondere aus den Fig. 2 und 3 der Zeichnung zu ersehen. Die Gelenkverbindung wird hierbei gemäß Fig. 3 beispielsweise von einem Filmscharnier 21 gebildet, welches in der Nähe der Befestigungsstelle des Ausstellhebels 9 am Gleitstück 8 angeordnet ist. Ferner ist in der Zeichnung auch der Führungskanal für das Antriebskabel 15 gezeigt und verdeutlicht, welcher mit dem Bezugszeichen 20 versehen ist.

Wie sich aus den Fig. 1 bis 7 der Zeichnung ersehen läßt, ist bei dem insgesamt mit 1 bezeichneten Faltdach das Verdeck 4 wenigstens in dem Bereich, an dem die Dachöffnung 3 in der festen Dachfläche 2 verschlossen ist, in einem Abstand von den Längsführungen 5 dachfest angebunden, wozu bei der ersten bevorzugten Ausführungsform das Verschlußkabel 13, welches an der Längsführung 5 dachfest beweglich geführt ist, und das Gewebe- oder Folienband 17 vorgesehen sind, welches sich über ein Großteil der Längserstreckung des Verdecks 4 in der Nähe seiner Längsränder 10 erstreckt. Somit ist bei geschlossenem Verdeck 4 eine zuverlässige Anlage des Verdecks 4 gegen die feste Dachfläche 2 gegeben, und selbst bei schneller Fahrt wird hierdurch in wirksamer Weise ein Abheben des Verdecks 4 im Bereich der Längsränder 10 verhindert. Ferner wird auch durch diese Anbindung des Verdecks 4 die Diebstahlsicherheit eines derartigen Faltdaches 1 verbessert, da man nicht ohne weiteres das Verdeck 4 im Bereich der Längsränder 10 von der festen Dachfläche 2 abheben kann. Selbst wenn man dies versucht, so ist dennoch der Fahrzeuginnenraum des Fahrzeugs nicht unmittelbar zugänglich, da das Gewebe- oder Folienband 17 einen unmittelbaren Eingriff in das Fahrzeuginnere über die Dachöffnung 3 verhindert.

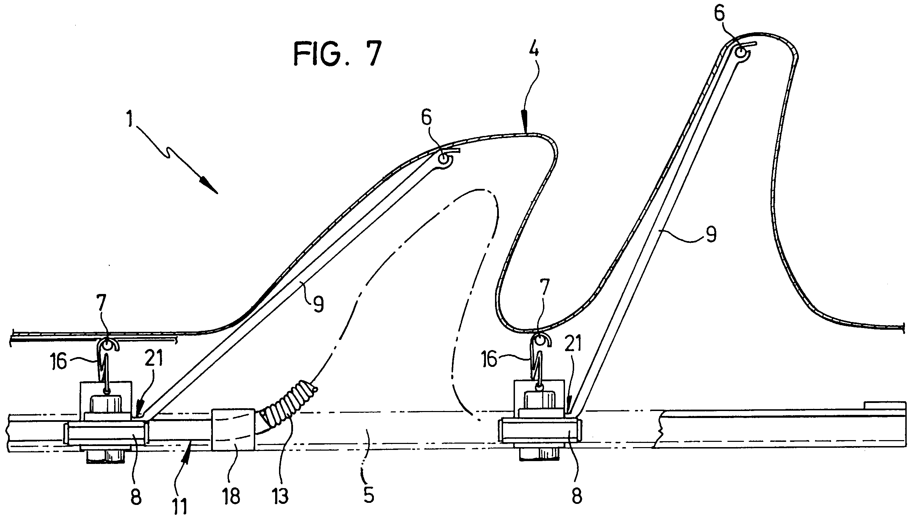

An Hand Fig. 7 wird beispielsweise die Wirkung der lösbaren Verbindungseinrichtung 11 im Zusammenhang mit den den Faltspriegeln zugeordneten Ausstellhebeln 9 näher erläutert. Fig. 7 verdeutlicht beispielsweise ein Faltdach 1, bei dem das Verdeck 4 wenigstens teilweise die in der festen Dachfläche 2 vorgesehene Dachöffnung 3 freilegt. Unter Bezugnahme auf Fig. 1 entspricht der in Fig. 7 verdeutlichte Zustand des Verdecks 4 etwa einer Stellung des Faltdachs 1, bei der ein Drittel der Dachöffnung 3 beispielsweise freigelegt ist. Das Verschlußkabel 13 tritt über das Einführungsstück 18 aus dem zugeordneten Führungskanal 19 aus, so daß der in Fig. 7 rechts liegende Bereich des Verdecks 4 sich in vorbestimmter und gezielter Weise in Falten legen kann. Ab dem Austreten des Verschlußkabels 13 aus dem Führungskanal 19 ist die dachfeste Anbindung des Verdecks 4 aufgehoben und das flexible Material des Verdecks 4 kann sich in Falten legen. Dank der gelenkigen Verbindung des Ausstellhebels 9 über das Filmscharnier 21 und der Verbindung mit dem zugeordneten Zwischenspriegel 7 wird durch den Ausstellhebel 9 und dessen Verbindung mit dem Zwischenspriegel 7 die höchste Stelle der zu bildenden Falten bestimmt. Um das flexible Material des Verdecks 4 in gezielter Weise in Falten zu legen, ist der jeweilige Zwischenspriegel 7 über die Feder 16 an dem zugeordneten Gleitstück 8 niedergehalten und wird in Richtung der festen Dachfläche 2 niedergedrückt. Somit sind auch die jeweils tiefsten liegenden Stellen der Faltenbildung durch die Lage des Zwischenspriegels 7 und der diesem zugeordneten Feder 6 fest vorgegeben und vorbestimmt.

Auf die zuvor beschriebene Weise wird beim erfindungsgemässen Faltdach 1 erreicht, daß man bei teilweise geöffnetem oder vollständig geöffnetem Verdeck 4 eine vorbestimmte Faltenbildung in einer solchen Weise erhält, daß das Faltdach 1 insgesamt gesehen ein möglichst strömungsgünstiges Profil hat, um unerwünschte Geräusche auch bei teilweise geöffnetem Verdeck 4 bei einem Faltdach 1 zu vermeiden.

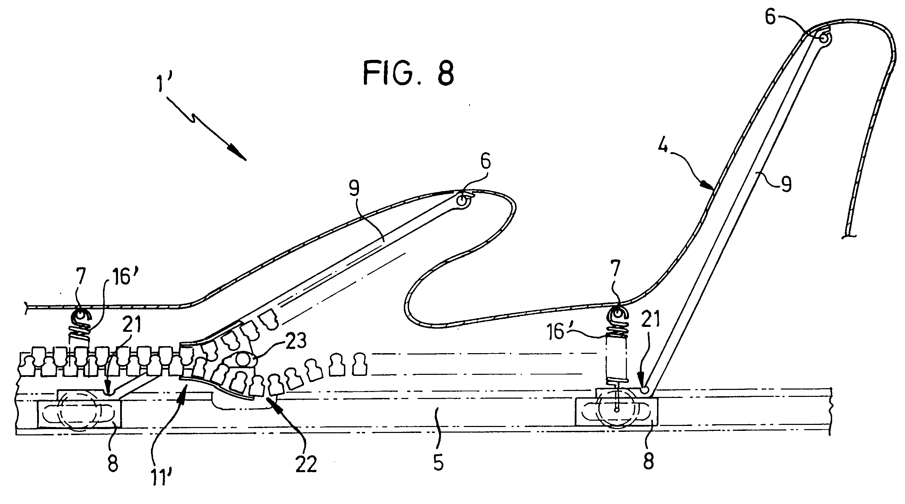

An Hand von Fig. 8 wird eine zweite bevorzugte Ausführungsform eines dort insgesamt mit 1' bezeichneten Faltdachs erläutert.

Als lösbare Verbindungseinrichtung 11' ist bei dieser Ausführungsform an Stelle des Verschlußkabels 13 im Bereich eines nicht näher dargestellten Gewebe- oder Folienbandes 17 ein Reißverschluß 22 auf jeder Längsseite des Verdecks 4 vorgesehen. Die Auslegungseinzelheiten hinsichtlich der Faltspriegel 6, der Zwischenspriegel 7, der Gleitstücke und der Ausstellhebel 9 sind im wesentlichen übereinstimmend wie voranstehend an Hand den Fig. 1 bis 7 erläutert ausgelegt. Der jeweilige Zwischenspriegel 7 ist am zugeordneten Gleitstück 8 ähnlich wie bei den voranstehenden Ausführungsformen über eine Feder 16' verbunden.

Zum zwangsweisen Öffnen des Reißverschlusses 22 sowie zum Schließen desselben beim Schließen des Verdecks 4 ist ein Öffnungs- und Schließteil 23 in einem ähnlichen Bereich wie das Einführungsstück 18 bei der voranstehend beschriebenen Ausführungsform angeordnet. Mit Hilfe dieses Öffnungs- oder Schließteils 23 werden dann die einzelnen Glieder des Reißverschlusses 22 in Abhängigkeit von der Bewegungsrichtung des Verdecks 4 voneinander gelöst oder haken ineinander ein. Somit gestattet dieses Öffnungs- und Schließteil 23 in ähnlicher Funktion wie das Einführungsstück 18 die Aufhebung der dachfesten seitlichen Anbindung des Verdecks 4 ab einem gewissen Öffnungsweg des Faltdachs 1'. Die gezielte Falterbildung erfolgt dann auf entsprechende Weise wie bei der voranstehenden Ausführungsform im Zusammenwirken mit den Ausstellhebeln 9 und der Verbindung der jeweiligen Zwischenspriegel 7 über die Feder 16' mit dem Gleitstück 8.

Bei dieser Ausgestaltungsform des Faltdaches 1' vereinfacht sich insbesondere die konstruktive Auslegung der Längsführungen 5, da der Führungskanal 19 für das Verschlußkabel 13 sowie die zugeordnete Brücke 14 entfallen kann und es somit ausreichend ist, daß die Längsführungen 5 eine schienenförmige Führung für die jeweiligen Gleitstücke 8 sowie einen zugeordneten Führungskanal 20 für das Antriebskabel 15 gegebenenfalls umfassen.

Selbstverständlich ist die Erfindung nicht auf die voranstehend erläuterten Einzelheiten der bevorzugten Ausführungsformen beschränkt, sondern es sind zahlreiche Abänderungen und Modifikationen möglich, die der Fachmann im Bedarfsfall treffen wird, ohne den Erfindungsgedanken zu verlassen. Vielmehr ist es bei der erfindungsgemäßen Auslegung des Faltdachs 1, 1' wesentlich, daß über einen Großteil der Längserstreckung des Verdecks 4 seitlich in der Nähe der Längsränder 10 des Verdecks 4 eine dachfeste Anbindung des Verdecks 4 vorgesehen ist, wozu eine lösbare Verbindungseinrichtung 11, 11' vorhanden ist. Ferner ist das Faltdach 1, 1' derart gestaltet, daß die Faltenbildung des Faltdachs 1, 1' beim Freilegen der Dachöffnung 3 in gezielter Weise und vorbestimmter Weise erfolgt, um eine möglichst regelmäßige, wenig Platz in Anspruch nehmende Faltenbildung zum Öffnen des Verdecks 4 zu erzielen und insbesondere die Faltenbildung des Verdecks 4 möglichst strömungsgünstig zu gestalten.

Die Längsführungen 5 können beispielsweise schienenartig ausgestaltet sein, wobei aus montagetechnischen Gründen insbesondere eine einteilige Auslegung der Längsführungen 5 bevorzugt wird, in welcher gegebenenfalls die Führungen für die Gleitstücke 8, das Antriebskabel 15 und gegebenenfalls für das Verschlußkabel 13 integriert sind. Diese Längsführungen 5 können aus metallischem Material oder vorzugsweise aus Kunststoff hergestellt sein. Selbstverständlich ist auch eine mehrteilige Auslegung der Längsführungen 5 möglich. An Stelle der vorgesehenen Federn 16, 16' können auch irgendwelche andere geeignete Einrichtungen mit einer vorbestimmten Eigenelastizität eingesetzt werden.

### Bezugszeichen

- 1: Faltdach insgesamt in den Fig. 1 bis 7,
- 1': Faltdach insgesamt in Fig. 8,
- 2: Feste Dachfläche,
- 3: Dachöffnung,
- 4: Verdeck insgesamt,
- 5: Längsführungen,
- 6: Faltspriegel,
- 7: Zwischenspriegel,
- 8: Gleitstücke,
- 9: Ausstellhebel,
- 10: Längsränder von Verdeck 4,
- 11: Lösbare Verbindungseinrichtung in den Fig. 1 bis 7,
- 11': Lösbare Verbindungseinrichtung in Fig. 8,
- 12: Spannseil,
- 13: Verschlußkabel,
- 14: Brücke,
- 15: Antriebskabel,
- 16: Feder in den Fig. 1 bis 7,
- 16': Feder in Fig. 8,
- 17: Gewebe- oder Folienband,
- 18: Einführungsstück,
- 19: Führungskanal für Verschlußkabel 13,
- 20: Führungskanal für Antriebskabel 15,
- 21: Filmscharnier,
- 22: Reißverschluß,
- 23: Öffnungs- und Schließteil.

## Patentansprüche

1. Faltdach (1) für Fahrzeuge mit einem Verdeck (4), mit einer wechselnden Folge von Faltspriegeln (6), die mittels Ausstellhebeln (9) zum Öffnen des Verdecks (4) schwenkbar sind und mit Zwischenspriegeln (7), welche wenigstens teilweise beidseits mit Längsführungen (5) zum wahlweisen Verschließen oder mindestens teilweisen Freigeben einer in einer festen Dachfläche (2) vorgesehenen Dachöffnung (3) zusammenwirken, dadurch **gekennzeichnet,** daß wenigstens der geschlossene Teil des Verdecks (4) beidseits in einem Abstand von den Längsführungen (5) in Richtung zu den Längsrändern (10) des Verdecks (4) über eine einen zusätzlichen Seitenverschluß bildende lösbare Verbindungseinrichtung (11; 11') dachfest angebunden und niedergehalten ist.

2. Faltdach nach Anspruch 1, dadurch gekennzeichnet, daß die Verbindungseinrichtung (11; 11') im hinteren Bereich der Längsführungen (5) zwangsgesteuert lösbar ist.

3. Faltdach nach Anspruch 1 oder 2, dadurch gekennzeichnet, daß die lösbare Verbindungseinrichtung (11) von einem in einem Verschlußkabel-Führungskanal (19) verlaufenden Verschlußkabel (13) gebildet wird, das über ein flexibles Material (17) beidseits an den Längsseiten mit dem Verdeck (4) verbunden ist.

4. Faltdach nach Anspruch 2, dadurch gekennzeichnet, daß zum zwangsgesteuerten Lösen ein Einführungsstück (18) angeordnet ist, welches den Verschlußkabel-Führungskanal (19) in Richtung des Verdecks (4) freilegt.

5. Faltdach nach Anspruch 4, dadurch gekennzeichnet, daß im Öffnungsbereich des Einführungsstücks (18) zur Erleichterung des Ein- und Auslaufs des Verschlußkabels (13) Führungen vorgesehen sind.

6. Faltdach nach einem der Ansprüche 3 bis 5, dadurch gekennzeichnet, daß jedes Verschlußkabel (13) an den Längsenden mit dem Verdeck (4) fest verbunden ist.

7. Faltdach nach einem der Ansprüche 3 bis 6, dadurch gekennzeichnet, daß das Verschlußkabel (13) die Bewegung des Verdecks (4) beim Öffnen und Schließen mitmacht.

8. Faltdach nach Anspruch 1 oder 2, dadurch gekennzeichnet, daß die lösbare Verbindungseinrichtung (11') von einem Reißverschluß (22) gebildet wird.

9. Faltdach nach Anspruch 8, dadurch gekennzeichnet, daß zum zwangsgesteuerten Lösen des Reißverschlusses (22) ein Öffnungs und Schließteil (23) mit den Reißverschlußgliedern zusammenwirkt.

10. Faltdach nach Anspruch 9, dadurch gekennzeichnet, daß in der Nähe des Öffnungs- und Schließteils (23) Führungen für die Reißverschlußglieder vorgesehen sind.

11. Faltdach nach einem der vorangehenden Ansprüche, dadurch gekennzeichnet, daß die Zwischenspriegel (7) in den Längsführungen (5) über Gleitstücke (8) längsbeweglich geführt sind.

12. Faltdach nach Anspruch 7 und Anspruch 11, dadurch gekennzeichnet, daß das Verschlußkabel (13) mit dem Gleitstück (8) über eine Brücke (14) zur Mitnahme verbunden ist.

13. Faltdach nach Anspruch 11 oder 12, dadurch gekennzeichnet, daß die Faltspriegel (6) über einen Ausstellhebel (9) gelenkig mit dem jeweiligen Gleitstück (8) verbunden sind.

14. Faltdach nach Anspruch 13, dadurch gekennzeichnet, daß die Gelenkverbindung von einem Filmscharnier (21) gebildet wird.

15. Faltdach nach einem der Ansprüche 11 bis 14, dadurch gekennzeichnet, daß ein Antriebskabel (15) wenigstens das Gleitstück (8) in den Längsführungen (5) verfährt.

16. Faltdach nach einem der Ansprüche 11 bis 15, dadurch gekennzeichnet,daß das Verdeck (4) an wenigstens einem Zwischenspriegel (7) niedergehalten ist.

17. Faltdach nach Anspruch 16, dadurch gekennzeichnet, daß zum Niederhalten eine Feder (16; 16') vorgesehen ist.

18. Faltdach nach Anspruch 3 und 15, dadurch gekennzeichnet, daß der Antriebskabel-Führungskanal (20) und der Verschlußkabel-Führungskanal (19) abgesehen vom Einführungsstück (18) in einer gemeinsamen Längsführung (5) vorgesehen sind.

19. Faltdach nach einem der vorangehenden Ansprüche, dadurch gekennzeichnet, daß jede Längsführung (5) von einer Führungsschiene gebildet wird.

## Claims

1. A folding roof (1) for vehicles with a hood (4), with an alternating sequence of fold supports (6), adapted to be pivoted by means of push-out levers (9) to open the hood (4), and with intermediate struts (7) which cooperate at least partially on both sides with longitudinal guides (5) for optionally closing or at least partially opening a roof aperture (3) provided in a fixed roof area (2), characterised in that at least the closed part of the hood (4) is on both sides rigidly connected to the roof and is held don at a distance from the longitudinal guides (5) in the direction of the longitudinal edges (10) of the hood (4) via a separable connecting device (11, 11') which forms an additional lateral fastening.

2. A folding roof according to Claim 1, characterised in that the connecting device (11, 11') is, under positive control, separable in the rear part of the longitudinal guides (5).

3. A folding roof according to Claim 1 or 2, characterised in that the separable connecting device (11) is constituted by a fastening cable (13) extending within a fastening cable guide channel (19), said cable being connected at both ends on the longitudinal sides to the hood (4) via a flexible material (17).

4. A folding roof according to Claim 2, characterised in that for positively controlled detachment, an insertion piece (18) is provided which exposes the fastening cable guide channel (19) in the direction of the hood (4).

5. A folding roof according to Claim 4, characterised in that in the opening area of the insertion piece (18) guides are provided to facilitate insertion and emergence of the fastening cable (13).

6. A folding roof according to one of Claims 3 to 5, characterised in that each fastening cable (13) is rigidly connected to the hood (4) at the longitudinal ends.

7. A folding roof according to one of Claims 3 to 6, characterised in that the fastening cable (13) accompanies the movement of the hood (4) during opening and closing.

8. A folding roof according to Claim 1 or 2, characterised in that the separable connecting device (11') is constituted by a sliding clasp fastener (22).

9. A folding roof according to Claim 8, characterised in that for positively controlled separation of the sliding clasp fastener (22), an opening and closing part (23) cooperates with the sliding clasp fastener links.

10. A folding roof according to Claim 9, characterised in that in the vicinity of the opening and closing part (23) there are guides for the sliding clasp fastener links.

11. A folding roof according to one of the preceding Claims, characterised in that the intermediate struts (7) are guided for longitudinal movement in the longitudinal guides (5) via sliding members (8).

12. A folding roof according to Claim 7 and Claim 11, characterised in that the fastening cable (13) is for entrainment connected to the sliding member (8) via a bridge (14).

13. A folding roof according to Claim 11 or 12, characterised in that the fold struts (6) are articulatingly connected to the respective sliding member (8) via a push-out lever (9).

14. A folding roof according to Claim 13, characterised in that the articulating connection is a film hinge (21).

15. A folding roof according to one of Claims 11 to 14, characterised in that a drive cable (15) transports at least the sliding member (8) in the longitudinal guides (5).

16. A folding roof according to one of Claims 11 to 15, characterised in that the hood (4) is held down at least at one intermediate strut (7).

17. A folding roof according to Claim 16, characterised in that a spring (16; 16') is provided to perform the holding-down function.

18. A folding roof according to Claim 3 and 15, characterised in that the drive cable guide channel (20) and the fastening cable guide channel (19) are, apart from the insertion piece (18), provided in a common longitudinal guide (5).

19. A folding roof according to one of the preceding Claims, characterised in that each longitudinal guide (5) is constituted by a guide rail.

## Revendications

1. Toit pliant pour véhicule comprenant une capote (4) avec une alternance de baleines de plis (6) qui peuvent être basculées par des leviers de déploiement (9) pour ouvrir la capote (4), et des baleines intermédiaires (7) coopérant au moins partiellement des deux côtés avec des rainures longitudinales de guidage (5) pour fermer sélectivement ou au moins libérer partiellement une ouverture de toit (3) prévue dans le pavillon fixe (2),
caractérisé en ce que
au moins la partie fermée de la capote (4) est liée solidairement au toit et est maintenue abaissée de part et d'autre à une distance des guides longitudinaux (5) en direction des bords longitudinaux (10) de la capote (4) par une installation de liaison amovible (11 ; 11') qui forme une fermeture latérale complémentaire.

2. Toit pliant selon la revendication 1,
caractérisé en ce que
l'installation de liaison (11, 11') est commandée de force de manière amovible dans la zone arrière des guides longitudinaux (5).

3. Toit pliant selon la revendication 1 ou 2,
caractérisé en ce que
l'installation de liaison amovible (11) est formée par un câble de fermeture (13) passant dans un canal de guidage de câble de fermeture (19), ce câble étant relié par une matière souple (17) des deux côtés, aux côtés longitudinaux de la capote (4).

4. Toit pliant selon la revendication 2,
caractérisé en ce que
pour enlever de manière commandée de force, il est prévu une pièce d'introduction (18) qui dégage le canal de guidage du câble de fermeture (19) dans la direction de la capote (4).

5. Toit pliant selon la revendication 4,
caractérisé en ce que
dans la zone d'ouverture de la pièce d'introduction (18), il y a des moyens de guidage pour faciliter l'entrée et la sortie du câble de fermeture (13).

6. Toit pliant selon l'une des revendications 3 à 5,
caractérisé en ce que
chaque câble de fermeture (13) est relié solidairement par les extrémités longitudinales à la capote (4).

7. Toit pliant selon l'une des revendications 3 à 6,
caractérisé en ce que
le câble de fermeture (13) participe au mouvement de fermeture et d'ouverture de la capote (4).

8. Toit pliant selon les revendications 1 ou 2,
caractérisé en ce que
l'installation de liaison amovible (11') est formée par un moyen de liaison arrachable (22).

9. Toit pliant selon la revendication 8,
caractérisé par
une pièce d'ouverture et de fermeture (23) coopère avec les éléments de fermeture arrachables pour détacher de manière commandée par la force la liaison arrachable (22).

10. Toit pliant selon la revendication 9,
caractérisé par
des moyens de guidage des organes de fermeture arrachables sont prévus à proximité de la partie d'ouverture et de fermeture (23).

11. Toit pliant selon l'une des revendications précédentes,
caractérisé en ce que
les baleines intermédiaires (7) sont guidées de manière mobile longitudinalement dans des guides longitudinaux (5) par l'intermédiaire de coulisseaux (8).

12. Toit pliant selon les revendications 7 et 11,
caractérisé en ce que
le câble de fermeture (13) est relié à un coulisseau (8) par un pontet (14) pour son entraînement.

13. Toit pliant selon les revendications 11 et 12,
caractérisé en ce que
la baleine (6) est reliée de manière articulée par un bras de débattement (9) au coulisseau (8) respectif.

14. Toit pliant selon la revendication 13,
caractérisé en ce que
la liaison articulée est formée par une charnière en film (21).

15. Toit pliant selon l'une des revendications 11 à 14,
caractérisé en ce qu'un
câble d'entraînement (15) conduit au moins le coulisseau (8) dans les guides longitudinaux (5).

16. Toit pliant selon l'une des revendications 11 à 15,
caractérisé en ce que
la capote (4) est maintenue abaissée sur au moins une baleine intermédiaire (7).

17. Toit pliant selon la revendication 16,
caractérisé par
un ressort (16, 16') pour assurer le maintien enfoncé.

18. Toit pliant selon les revendications 3 et 15,
caractérisé en ce que
le canal de guidage (20) du câble d'entraînement et le canal de guidage (19) du câble de fermeture, sont prévus dans un guide longitudinal (5) commun, indépendamment de la pièce d'entrée (18).

19. Toit pliant selon l'une des revendications précédentes,
caractérisé en ce que
chaque guide longitudinal (5) est formé par un rail de guidage.
